# EUROPEAN PATENT APPLICATION

(11) **EP 1 738 998 A1**
(43) Date of publication of application: **03.01.2007**
(21) Application number: 05076499.2
(22) Date of filing: 29.06.2005
(51) Int. Cl.: B62D 65/04, B62D 25/02

(54) **Method for assembling a vehicle body**

(71) Applicant: Corus UK LTD., London SW1P 4WY (GB)
(72) Inventor: Baldwin, Michael John, Warwick Warwickshire CV34 6HL (GB)
(74) Representative: Kruit, Jan

(57) **Abstract**

Method for assembling a vehicle body, in particular a body in white, by the incorporation of two structural rings, a left hand structural ring (1) and a right hand structural ring (3) these structural rings being continuous hollow sections reinforcing the passenger compartment roof (14), pilars (8,10) and floor (16) and connecting the vehicle's front longitudinals to the vehicle's rear longitudinals.

## Description

The invention relates to a method for assembling a vehicle body, in particular a body in white.

At present the vast majority of passenger vehicles manufactured worldwide are constructed as a body in white also known as a unibody. The body in white is a structure made of a large number of pressed sheet metal panels that are joined by welding, riveting and bonding. A body in white is usually made up of 200 to 300 pressed panels. This structure provides the vehicle's strength, stiffness and crashworthiness, and is the structure for the attachment of the fixed and hinged closures, fixed glazing, vehicle interior and powertrain and chassis componentry. Some elements of the body in white may be made from tube, such as hydroformed tube. Some elements of the body in white may be made from non-pressed metal sheet such as cold or hot rolled steel.

US 5785378 describes such a conventionally built body in white, the novelty claimed in this case is the reduction in part count by the integration of several reinforcement elements into a single ring shaped reinforcement that surrounds the door aperture. This integration of existing elements represents a small change in the method of manufacturing a vehicle body side only. US 5785378 does not mention how this assembled body side is assembled to form a body in white.

Usually the pressed metal panels are joined along edge flanges by welding, preferably spot-welding that is quick and cheap. Some pressed metal parts may be formed from tailor-welded blanks, composed of materials of different grades or gauges.

To assemble all the parts of which the body in white is made of requires the forming of a number of sub-assemblies, such as a sub-assembly of the front longitudinals with the bulkhead, the toe board and the lower screen rail, a sub-assembly of the floor, the tunnel and the seat cross members, a sub-assembly of the boot floor, the rear longitudinals, the rear bulkhead, the heel board, the rear seat pan, the rear wheel arches and the rear cross member, and a sub-assembly of the body side inner and outer assemblies together forming the A-pillar, cant rail, C/D post and floor members, where necessary together with the B-pillar. These sub-assemblies have to be assembled to form the body in white, together with parts that are not included in the sub-assemblies.

US 5860694 describes a method intended to overcome some of the resultant dimensional distortion inherent in the use of the conventional assembly method. In US 5860694 the body sides are not joined together to form a sub assembly but joined to the floor structure ('underframe') as separate elements in turn. The elements that make up the body in white are therefore the same as a conventional body in white although with a slight change in assembly sequence.

Usually the assembly of the body in white is started with the sub-assemblies that form the lower portion of the body in white, such as the sub-assembly with the front longitudinals plus a sub-assembly with the floor and a sub-assembly with the rear longitudinals, to which left and right the sub-assemblies of the body side inner and outer are welded and a front header, roof bow and rear header are added. This build sequence is common for all manufacturers of a body in white, though details may be different according to vehicle type and manufacturer.

The present assembly, as discussed above, has a number of disadvantages.

The key disadvantage is the discontinuous load path. This disadvantage is most obvious in a frontal crash where the high compressive loads generated by the folding of the front longitudinals are transferred to the floor, sills and 'A' pillar. This flow of load distribution is known as the 'load path'. It can be seen that all the components in this load path need to be manufactured from high strength materials, be of substantial section and should have as few joints, kinks and changes in section as possible. The current arrangement of components in a body in white does not allow for this.

The current process has an extremely high cost of investment for press tools, presses, assembly fixtures, welding equipment, robots et cetera and thus requires that a body in white is made in large volumes, typically over 200,000 a year. For medium and large vehicles this is cost effective, but for small vehicles, which inherently have the lowest profitability, the numbers in which the body in white is built are moderate, so the assembly as described above is expensive. Alternative construction techniques have been proposed as a low investment solution, but to date they all have an unacceptably high piece price.

The large number of parts results in a large number of joints. Joints reduce the structural continuity and result in a loss in both stiffness and strength of the body in white.

The welding process generates heat, causing localized distortion and thus results in variations from one vehicle to the next in the production line. This poses problems for the use of robots, requires expensive framing fixtures during assembly and can give difficulties later in the production sequence where accurate fit of components (closures, suspension, trim etc) is required.

DE 3720344 describes a means of reducing the effects of distortion by assembling the inner elements of the roof pillars, headers and cant rails to form a more three dimensional structure before the placement of the conventional body sides. This is simply a change in the sequence of assembly of a conventionally designed body in white and does nothing to address the lack of continuous structure through the vehicle.

Large sub-assemblies are heavy and difficult to handle. A sub-assembly needs to have stability of shape to enable an accurate forming of the body in white. The present sub-assemblies often introduce stability by providing extra structural reinforcements, which may hamper the welding process. The sub-assemblies are thus often a compromise between stability and weldability.

Furthermore, the increasing use of higher strength steels and aluminium results in sub assemblies with greater dimensional distortion due to the increased amount of springback that higher strength metals exhibit when formed by a pressing operation.

It is an object of the present invention to provide a method for assembling a vehicle body, in particular a body in white that is more economical than the present assembly method.

It is another object of the present invention to provide a method for assembling a vehicle body, in particular a body in white, that results in a body in white having a higher stiffness, higher strength, improved crashworthiness and/or lighter weight as compared to the body in white resulting from the conventional method.

It is yet another object of the present invention to provide a method for assembling a vehicle body, in particular a body in white, that results in a more uniform body in white, i.e. having greater dimensional accuracy and repeatability in production.

It is also an object of the present invention to provide an improved body in white.

One or more of these objects is achieved using the present invention according to which a method for assembling a vehicle body, in particular a body in white, by the incorporation of two structural rings, a left hand structural ring and a right hand structural ring, these structural rings being continuous hollow sections surrounding openings for the doors of the vehicle, that connect the vehicle's front longitudinals to the vehicle's rear longitudinals, the method comprising the steps:
a) Manufacturing four single piece, annular metal pressings:
   - a left hand structural ring outer part,
   - a left hand structural ring inner part,
   - a right hand structural ring outer part,
   - a right hand structural ring inner part,
      the left hand structural ring inner and outer parts together forming the left hand structural ring in the assembled vehicle body and the right hand structural ring inner and outer parts together forming the right hand structural ring in the assembled vehicle body;
b) Using the parts manufactured in step a) to manufacture the following sub-assemblies:
   - a left hand sub-assembly containing the left hand structural ring outer part,
   - a right hand sub-assembly containing the right hand structural ring outer part,
   - a body centre sub-assembly containing the left hand structural ring inner part and the right hand structural ring inner part;
c) Manufacturing the vehicle body by the assembly of the three sub-assemblies manufactured in step b) above by:
   - joining the left hand structural ring outer part to left hand structural ring inner part,
   - joining the right hand structural ring outer part to right hand structural ring inner part.

It should be noted that this method does not involve the use of conventional body side assembly (i.e. split at the vehicle sill) but an assembly split at the front longitudinals, rear longitudinals, roof, pillars and floor and therefore fundamentally alters the body in white and the build sequence of the body in white.

This method thus provides an assembly comprising three steps: as a first step the assembly and pressing of the structural ring inner and outer parts, as a second step the manufacture of three sub-assemblies, namely a left hand sub-assembly, a right hand sub-assembly and a body centre sub-assembly, and as a third step the assembling of these three sub-assemblies to form the body in white. In principle in this way the majority of the body in white is formed by the assembly of the three sub-assemblies, but of course some parts of the body in white may be added after the assembly of the three sub-assemblies to complete the body in white.

A main aspect of the method according to the invention is that a body centre is assembled as a sub-assembly to the total height of the body in white, comprising as many parts as necessary for its stability, such that the left hand and right hand sub-assemblies can be welded to this body centre sub-assembly to effectively complete the body in white, apart from some parts that can be added afterwards. The left hand and right hand sub-assemblies thus can be easily attached to the body centre by welding along their edge flanges.

It can be seen that the invention allows for a fewer pressed metal components (typically around 100 compared to more than 200 in a conventional assembly) and therefore fewer press tools, fewer assembly stations as well as a reduced amount of welding, welding robots and consumables. This method thus provides a lower investment cost for the body in white assembly as well as a lower piece price of the assembled body in white.

During the process of joining the body centre sub-assembly to the left hand and right hand sub-assemblies, continuous box sections formed are the 'structural rings' as defined above. The structural rings are the key to the improved structural performance of the body in white and represent a novel step in body in white design. The structural rings have an inherent stiffness because they form a continuous hollow ring.

Preferably, each structural ring comprises the components: an A-pillar, a cant rail, a C/D post, a dog leg, a front longitudinal, a rear longitudinal, a floor member, a swan-neck and an A-pillar/longitudinal transition (described hereafter as 'APLT'), and each outer part and each inner part of each structural ring comprises a part of each of these components. These components such as the A-pillar are always present in a body in white, but according to the invention these sections are split up and one half is part of the body centre sub-assembly and the other half is part of the left-hand or right-hand sub-assembly. In this way the full structural ring is only formed at the assembly of the body in white from the sub-assemblies.

The two pressed parts per side that form the structural ring not only integrate the components of the upper structure ('glass house') of the vehicle but, unlike in a conventional bodyside arrangement, it also integrates the A-pillar, the cant rail, the C/D post, the APLT, the dog-leg, the front longitudinal, the rear longitudinal, the swan-neck and the floor member.

The structural ring method allows for an easy access of welding equipment to assemble each of the three sub-assemblies. The inner parts of the structural rings that are part of the body centre sub-assembly provide stiffness to the body centre sub-assembly, which is advantageous for the dimensional stability of the body centre sub-assembly and the assembly of the body centre sub-assembly. Similarly, the outer parts of the structural rings provide stiffness to the left hand and right hand sub-assemblies.

The assembly split between these two structural ring parts also splits the body into fewer and more balanced sub-assemblies with fewer assembly operations overall and fewer weld access holes and easier welding conditions.

According to a preferred embodiment, the body centre sub-assembly comprises a bulkhead, a front header, a roof bow, a rear header, and the left hand structural ring inner part and the right hand structural ring inner part. These are the parts each body centre sub-assembly will usually need in the full body in white.

Preferably, the body centre sub-assembly also comprises a front floor and/or a rear floor and/or part of two shotguns and/or part of two front longitudinals. The rear floor can easily be attached to the body centre before the total assembly of the body in white, and the front longitudinals are preferably split up such that part of the front longitudinals are integrated in the body centre sub-assembly, because in this way the forces on the front longitudinal (e.g. in the event of a crash) will be transferred more effectively through the body in white.

More preferably, the body centre sub-assembly also comprises part of two B-pillars and/or part of two rear longitudinals. This is of course only the case when these portions are present in the particular body in white.

Preferably, each of the left hand and right hand sub-assemblies also comprises part of a B-pillar and/or part of a rear longitudinal and/or part of a front longitudinal. The integration of these parts into the left and right hand sub-assemblies is easier before the full assembly of the body in white is effected, and especially the parts of the front longitudinal provide a way to transfer forces more effectively through the body in white.

The choice of adding front and /or rear longitudinal may be dependant on the size of vehicle and the press bed size available required to manufacture each of the four structural ring parts.

According to a preferred embodiment each of the left-hand and right-hand structural ring inner and outer parts is mainly produced by assembling metal parts from which an A-pillar, a cant rail, a C/D post, an APLT, a dog-leg, a front longitudinal, a rear longitudinal, a swan-neck and a floor member are to be formed, forming a ring-like assembly comprising these metal parts, and pressing this ring-like assembly to form the structural ring inner or outer part. In this way a large part of each of the left and right hand sub-assemblies can be pressed as one part, after the flat metal parts have been welded to form a tailor-welded blank before it is pressed into form. A tailor-welded blank produced by laser welding has less distortion at the weld line in comparison to the welding of pressed parts, and also suffers less heat damage. This method provides for easier production because the left and right hand sub-assemblies can be pressed as one part, so less pressing equipment is needed, and because less welding problems will occur because of pressed parts that do not fit well.

It can be seen that an alternative method of producing blanks can be used e.g. induction hardened blanks, tailor rolled blanks and other types of blanks where the strength can be varied locally according to design requirements.

A vehicle may have four doors, requiring a B-pillar separating the front and rear doors. In this case it is preferable that the ring-like assembly also comprises a metal part from which a B-pillar is to be formed and/or a metal part from which a rear longitudinal is to be formed and/or a metal part from which a front longitudinal is to be formed. These metal parts thus also form part of the tailor-welded blank, so less pressing equipment is needed and better fitted body side sub-assemblies are provided.

It can be demonstrated using finite element analysis that the use of three large, self stable, sub-assemblies in this way overcomes the major disadvantage of pressed high strength metal parts: that of distortion due to springback.

Furthermore, it can be demonstrated by finite element analysis that recently introduced grades of high strength metals such as dual phase (DP) steels, transformation induced plasticity steels (TRIP), twinning induced plasticity (TWIP) steels, hot pressed steels and high strength (5000 series) aluminium can be incorporated into a vehicle assembled with this structural ring design.

According to a preferred embodiment the metal parts from which an A-pillar, a cant rail, a roof rail, a C/D post, and a floor member on both sides of the body centre sub-assembly are to be formed, are assembled and pressed as a ring-like assembly according to the method as described above. Thus also the counterparts of the left and right hand sub-assemblies are assembled as flat metal parts and welded into a tailor-welded blank, whereby the amount of pressings for the body centre sub-assembly is reduced and a better fit is realised.

Preferably the ring-like assemblies of the body centre sub-assembly also comprise metal parts from which the B-pillar and/or the rear longitudinal and/or the front longitudinal are to be formed. The amount of pressings is thus further reduced.

This method also creates the opportunity for further component integration (the roof inner and tailgate ring panel) and alternative panel concepts.

The ring-like assemblies provided by this invention introduce continuous structural rings into the body in white. These structural rings have no sharp changes in shape or section and therefore provide a smooth and continuous load path for the dissipation of crash energy.

The adoption of this structural ring assembly method creates a vehicle that is inherently crashworthy due to the position and nature of the panels.

The invention also relates to a body in white produced with the method as described above, the body in white having front longitudinals contiguous with the structural rings. The body in white is this way has a higher structural strength and a higher stiffness when using the same gauge. This also gives an improvement of the crashworthiness, thus a better performance in for instance front, side and rollover impacts and better energy absorption of the body in white in total. This is partly due to the way of assembling of the body in white according to the method of the invention.

The invention moreover relates to a body in white produced with the method as described above, in which a pair of structural rings are formed as a consequence of joining together the left-hand sub-assembly and the right-hand sub-assembly to the body centre sub-assembly to form the body in white. This provides the body in white having the improved characteristics as indicated above.

The invention will be elucidated referring to the accompanying drawings.

Fig 1 shows the top and bottom view of a conventionally built vehicle, showing the upper and lower load paths.

Fig. 2 shows a top and bottom view of the body in white according to the invention, with improved upper and lower load paths.

Fig. 3 shows an example of the three sub-assemblies of a body in white according to the invention.

Fig. 4 schematically shows the assembly of a body centre sub-assembly according to the invention.

Fig. 5 schematically shows the assembly of a right hand sub-assembly according to the invention.

Fig. 6 schematically shows the assembly the final body in white according to the invention.

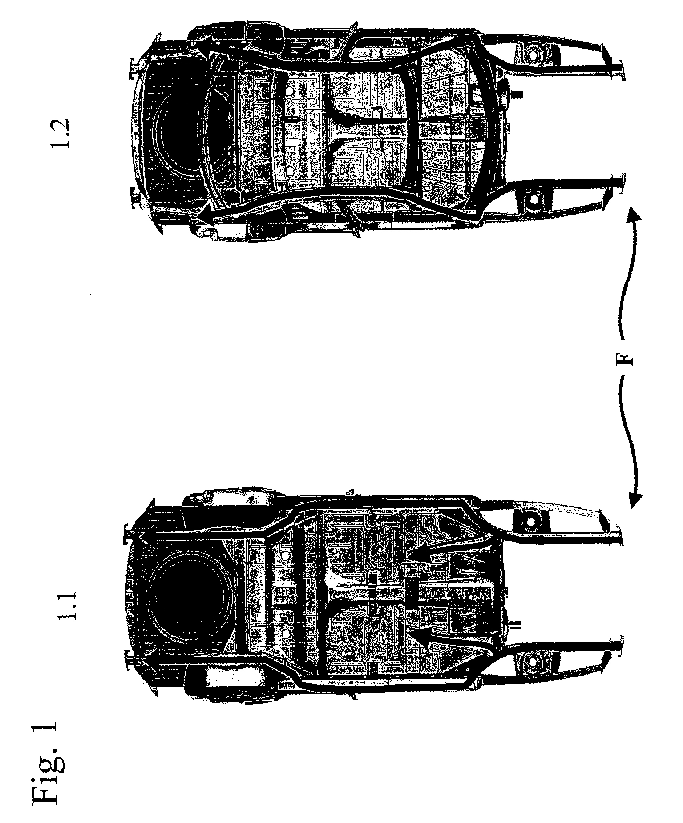

Fig. 1 shows a top and bottom view of a conventional body in white, where 1.1 is the bottom view and 1.2 is the top view. In both views the load path in the event of a frontal crash is illustrated by two arrowed lines. 'F' indicates the front of the vehicle. It can be seen that the load path goes through sharp angles and is discontinuous. This is inefficient since it requires thick gauge, heavy metal parts to carry the high crash loads without potentially dangerous buckling failure around the passenger compartment.

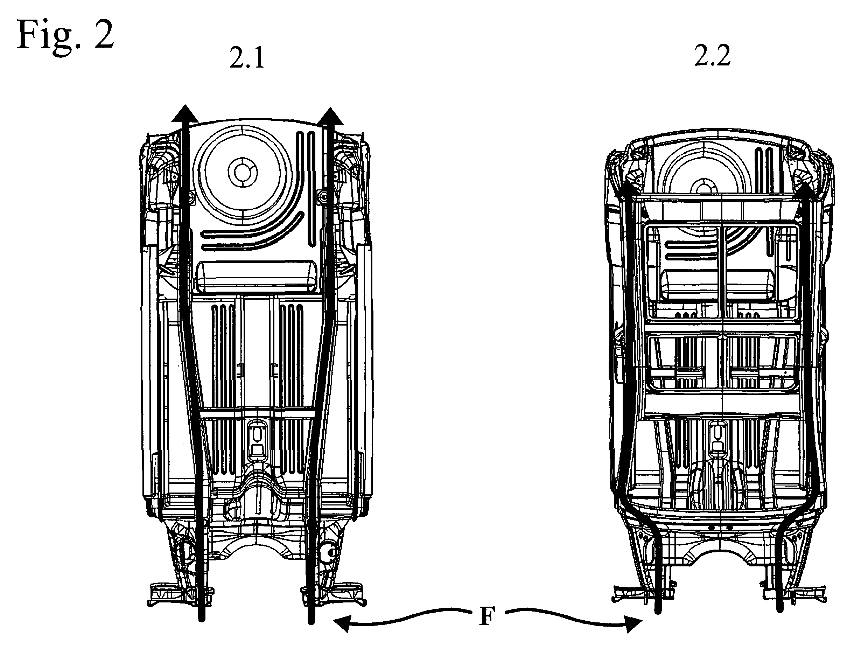

Fig. 2 shows a top and bottom view of a body in white according to the invention, where 2.1 is the bottom view and 2.2 is the top view. In both views the load path in the event of a frontal crash is illustrated by two arrowed lines. 'F' indicates the front of the vehicle. It can be seen that the load path is improved since it is smoother and continuous. The smoother and continuous load path result in a structure with greater efficiency since thinner gauge, lighter weight metal parts can be used without risk of dangerous buckling collapse around the passenger compartment.

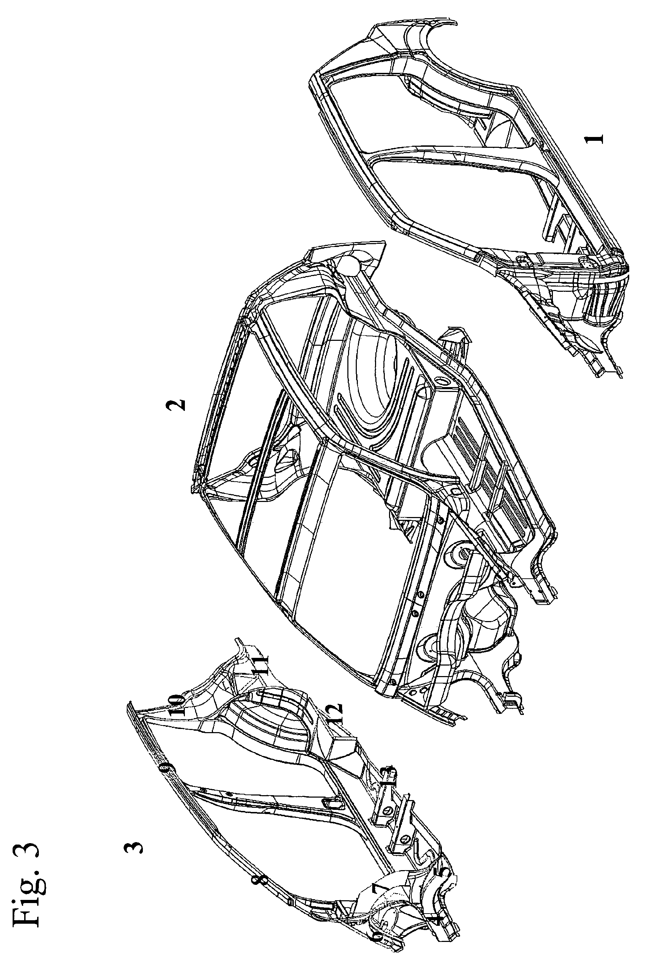

Fig.3 shows a body centre sub-assembly 2, a left-hand sub-assembly 1 and a right-hand sub-assembly 3.

Both sub-assemblies 1 and 3 mainly consist of a half of a structural ring formed of a pressed tailor welded blank. For example the right hand sub-assembly 3, in which parts of an A-pillar (8), a cant rail (9), a C/D post (10), an APLT (7), a dog-leg (5), a front longitudinal (4), a rear longitudinal (11), a swan-neck (12), a floor member (13), and a shot gun (6) are integrated.

The matching parts to these are found on the body centre sub-assembly 2.. The body centre sub-assembly also contains a bulkhead, front header, roof bow, rear header, front floor, and other usual portions that are part of the centre of a body in white.

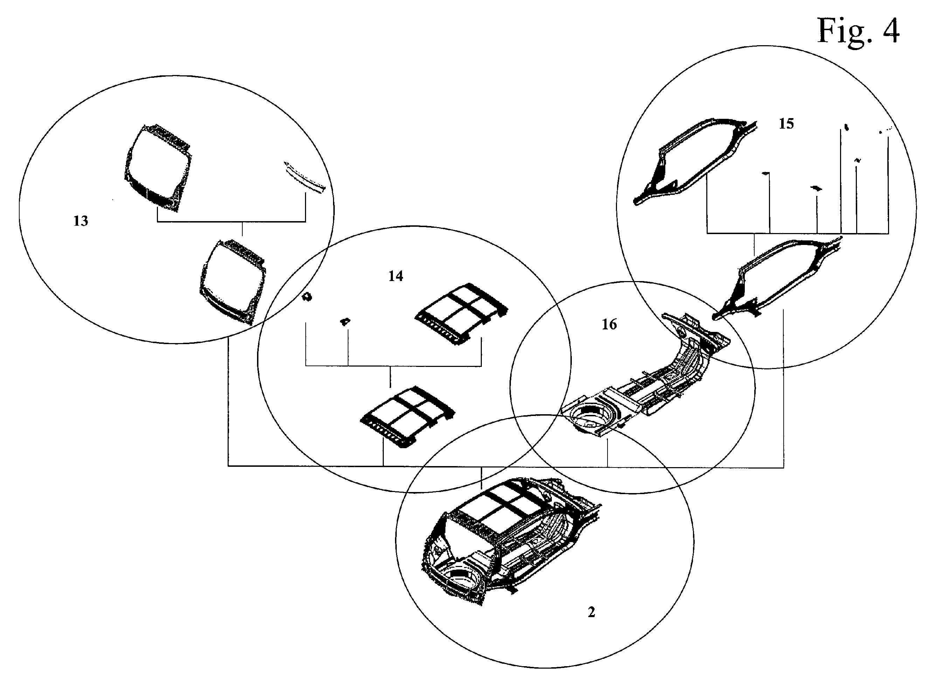

The assembly sequence for the body centre sub-assembly is shown diagrammatically in Fig.4.

Parts illustrated in Fig.4 are as follows:
2. Body centre sub-assembly.
13. Tailgate aperture assembly, comprising: panel tailgate aperture, crossmember rear.
14. Roof inner assembly comprising: panel roof inner, tailgate hinge reinforcement ― left hand, tailgate hinge reinforcement right hand.
15. Body outer inner inner assembly, comprising: panel body outer inner, shotgun inner, subframe mounting front, subframe mounting rear, bracket axle mounting rear, spring mounting rear.
16. Floor complete assembly.

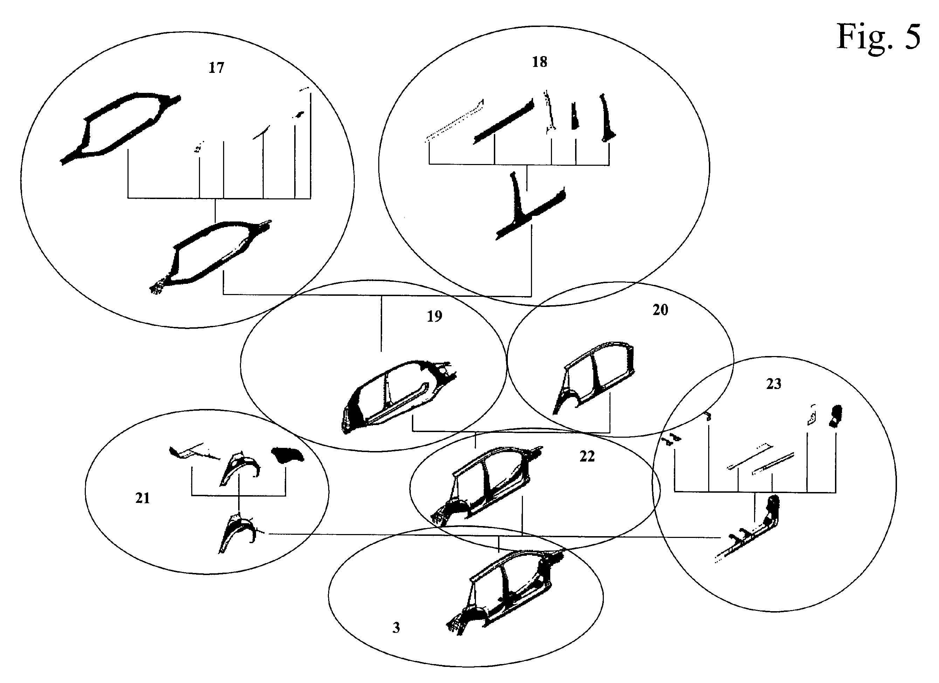

The assembly sequence for the body outer sub-assembly is shown diagrammatically in Fig.5.

Parts illustrated in Fig.5 are as follows:
3. Body outer sub-assembly.
17. Body outer inner outer assembly, panel body inner outer, shotgun outer, front spring mounting, reinforcement longitudinal, bracket damper mounting, closer rear.
18. Reinforcement bodyside outer assembly: reinforcement sill inner, reinforcement sill outer, 'B' pillar inner, reinforcement 'B' pillar, reinforcement 'B' pillar lower.
19. Body outer outer - stage one assembly.
20. Bodyside outer.
21. Rear wheelarch assembly: wheelarch inner rear, wheelarch inner front, panel quarter inner.
22. Body outer outer - stage two assembly.
23. Inner bodyside outer assembly: reinforcement 'A' pillar lower, 'A' pillar inner lower, bulkhead brace, seat support outer front, seat support outer rear, panel front floor outer, panel sill inner.

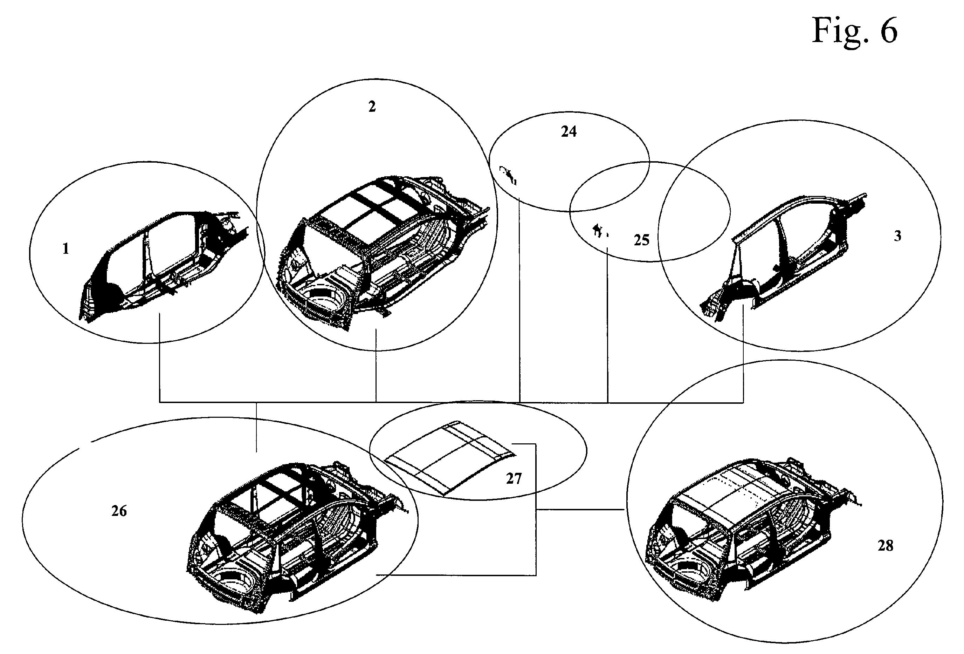

The assembly sequence for the final body in white assembly is shown diagrammatically in Fig.6.

Parts illustrated in Fig.6 are as follows:
1. Body outer sub-assembly, lefthand.
2. Body centre sub-assembly.
3. Body outer sub-assembly, righthand.
24. Headlamp mounting lefthand assembly, bracket slam tray support lefthand, panel headlamp mounting lefthand.
25. Headlamp mounting righthand assembly: bracket slam tray support righthand, panel headlamp mounting righthand.
26. Body in white.
27. Roof panel.
28. Final body in white.

The sub-assemblies 1, 2 and 3 as shown in Fig. 3, of which the manufacture is shown in Fig. 4 for the body centre sub-assembly 2 and in Fig. 5 for the right hand sub-assembly 3, and the manufacture of the left-hand sub-assembly 1 being similar to the manufacture of the right hand sub-assembly 3, are assembled according to Fig. 6. In this way two full structural rings are formed, which provide the body in white with an inherent stiffness. Moreover, fewer pressed metal components are required.

First forming left hand and right hand structural ring inner and outer parts makes pressing easier since first flat rings are formed. Less welding problems are encountered in this way, and less springback occurs.

It will be apparent to the person skilled in the art that many variations are possible in the components that are used and the sequence of production that is used.

## Claims

1. Method for assembling a vehicle body, in particular a body in white, by the incorporation of two structural rings, a left hand structural ring and a right hand structural ring, these structural rings being continuous hollow sections reinforcing the passenger compartment roof, pillars and floor, and connecting the vehicle's front longitudinals to the vehicle's rear longitudinals, the method comprising the steps:
a) Manufacturing four single piece, annular metal pressings:
- a left hand structural ring outer part,
- a left hand structural ring inner part,
- a right hand structural ring outer part,
- a right hand structural ring inner part,
the left hand structural ring inner and outer parts together forming the left hand structural ring in the assembled vehicle body and the right hand structural ring inner and outer parts together forming the right hand structural ring in the assembled vehicle body;
b) Using the parts manufactured in step a) to manufacture the following sub-assemblies:
- a left hand sub-assembly containing the left hand structural ring outer part,
- a right hand sub-assembly containing the right hand structural ring outer part,
- a body centre sub-assembly containing the left hand structural ring inner part and the right hand structural ring inner part;
c) Manufacturing the vehicle body by the assembly of the three sub-assemblies manufactured in step b) above by:
- joining the left hand structural ring outer part to left hand structural ring inner part,
- joining the right hand structural ring outer part to right hand structural ring inner part.

2. Method according to claim 1, wherein each structural ring comprises the components: an A-pillar, a cant rail, a C/D post, an APLT, a dog-leg, a front longitudinal, a rear longitudinal, a swan-neck and a floor member, and each outer part and each inner part of each structural ring comprises a part of each of these components.

3. Method according to claim 1 or 2, wherein the body centre sub-assembly comprises a bulkhead, a front header, a roof bow, a rear header, and the left hand structural ring inner part and the right hand structural ring inner part.

4. Method according to claim 3, wherein the body centre sub-assembly also comprises a front floor and/or a rear floor and/or part of two front longitudinals and/ or part of two shotguns.

5. Method according to claims 3 or 4, wherein the body centre sub-assembly also comprises part of two B-pillars and/or part of two rear longitudinals.

6. Method according to any one of the preceding claims, wherein each of the left hand and right hand sub-assemblies also comprises part of a B-pillar and/or part of a rear longitudinal and/or part of a front longitudinal.

7. Method according to claim 5 or 6, wherein each of the left-hand and right-hand structural ring inner and outer parts is mainly produced by assembling metal parts from which a A-pillar, a cant rail, a C/D post, an APLT, a dog-leg, a front longitudinal, a rear longitudinal, a swan-neck and a floor member are to be formed, forming a ring-like assembly comprising these metal parts, and pressing this ring-like assembly to form the structural ring inner or outer part.

8. Method according to claim 7, wherein the ring-like assembly also comprises a metal part from which a B-pillar is to be formed and/or a metal part from which a rear longitudinal is to be formed and/or a metal part from which a front longitudinal is to be formed.

9. Method according to claim 7, wherein the metal parts from which a A-pillar, a cant rail, a roof rail, a C/D post and a floor member on both sides of the body centre sub-assembly are to be formed, are assembled and pressed as a ring-like assembly according to the method of claim 7.

10. Method according to claim 9, wherein the ring-like assembly also comprises metal parts from which a B-pillar and/or a rear longitudinal and/or a front longitudinal and/ or part of a shotgun are to be formed.

11. Body in white produced with the method according to any one of the preceding claims having front longitudinals contiguous with the structural rings.

12. Body in white produced with the method according to any one of the preceding claims in which a pair of structural rings are formed as a consequence of joining together the left-hand sub-assembly and the right-hand sub-assembly to the body centre sub-assembly to form the body in white.
